# EUROPÄISCHE PATENTANMELDUNG

(11) **EP 1 158 636 A2**
(43) Veröffentlichungstag der Anmeldung: **28.11.2001**
(21) Anmeldenummer: 01112730.5
(22) Anmeldetag: 25.05.2001
(51) Int. Cl.: H02G 3/22

(54) **Kabeldurchführung**

(30) Priorität: 26.05.2000 DE 20009530 U
(71) Anmelder: Era-Elektrotechnik GmbH, 71083 Herrenberg (DE)
(72) Erfinder: König, Gerhard, 71139 Ehningen (DE); Geiger, Bernd, 71083 Herrenberg (DE)
(74) Vertreter: Schaumburg, Thoenes & Thurn

(57) **Zusammenfassung**

Bei einer Kabeldurchführung mit einem in Längsrichtung mindestens einen Kabelkanal (16) enthaltenden geflanschten Durchführungskörper (12) und einer durch den Kabelkanal (16) geführten elektrischen Leitung (38) mit Außenisolation (36) ist die Außenisolation (36) der elektrischen Leitung (38) auf einem Teil der Länge des Kabelkanals (16) durch eine Kunstharz-Vergußmasse (40) ersetzt, wobei der Flansch an einer Seite als Träger eines Dichtringes ausgebildet ist.

## Beschreibung

Die Erfindung betrifft eine Kabeldurchführung mit einem in Längsrichtung mindestens einen Kabelkanal enthaltenden geflanschten Durchführungskörper und einer durch den Kabelkanal geführten elektrischen Leitung mit Außenisolation.

Solche Kabeldurchführungen werden z.B. im Automobilbau verwendet. Sie kommen zum Einsatz, wenn ein Kabel, d.h. eine Leitung mit Außenisolation, oder ein Kabelbaum durch Wände in der Karosserie oder einzelnen Karosserieteilen hindurchgeführt werden soll. Diese bekannten Kabeldurchführungen bestehen meist aus einem gummielastischen Material. Sie verhindern ein Durchscheuern der Außenisolation an der Wand im Bereich der Durchführung. Außerdem dichten diese bekannten Kabeldurchführungen das Kabel mit der Wand häufig spritzwasserdicht ab, damit kein Spritzwasser durch den Bereich der Durchführung hindurchgelangen kann. Zu diesem Zweck gibt es z.B. auch Kabeldurchführungen, die nach Art einer Quetschverschraubung verschraubt werden, wodurch ein gummielastisches Dichtungselement den Bereich zwischen dem Kabel und der Wand abdichtet.

Bei den immer zahlreicher werdenden elektronischen Steuer- und Regelsystemen, die auch im Bereich der Motor- und Getriebetechnik mit steigender Bedeutung eingesetzt werden, müssen auch Zuleitungskabel in das Motorgehäuse und in das Getriebegehäuse durch deren jeweilige Wände durchgeführt werden. Die vorstehend beschriebenen Kabeldurchführungen sind hierzu nicht geeignet, da das Motoröl bzw. das Getriebeöl durch diese Kabeldurchführung hindurchgelangen kann. Wegen der Kapillarwirkung der Kabellitze kann das Öl sogar im Inneren des Kabels durch die Kabeldurchführung hindurch aus dem Motorgehäuse bzw. aus dem Getriebegehäuse austreten.

Aus diesem Grunde werden zum Durchführen von Kabeln in das Motorgehäuse bzw. in das Getriebegehäuse meist Steckverbinder verwendet, bei denen ein Teil als Buchse und ein Teil als Stecker ausgebildet ist. Die Buchse wird dann in die Wand des Motorgehäuses bzw. des Getriebegehäuses eingedichtet. Auf diese Weise kann kein Öl aus dem Motorgehäuse bzw. aus dem Getriebegehäuse austreten. Bei diesen Steckverbindern können die Steckkontakte allerdings leicht mit Öl oder anderem Schmutz verschmutzen, was zu Kontaktproblemen führt. Außerdem sind diese Steckverbinder aufwendig und teuer in der Herstellung und der Montage.

Es ist Aufgabe der Erfindung, eine Kabeldurchführung anzugeben, durch die keine Flüssigkeit und kein Gas hindurchgelangen kann.

Die Aufgabe wird bei einer Kabeldurchführung der eingangs genannten Art dadurch gelöst, daß die Außenisolation der elektrischen Leitung auf einem Teil der Länge des Kabelkanals durch eine Kunstharz-Vergußmasse ersetzt ist, und daß der Flansch an einer Seite als Träger eines Dichtringes ausgebildet ist.

Dadurch läßt sich bei der Kabeldurchführung nach der Erfindung das Hindurchgelangen einer Flüssigkeit oder eines Gases, z.B. das Austreten von Öl aus dem Motorgehäuse bzw. dem Getriebegehäuse, zwischen einer Gehäusewand und dem Flansch mit einem Dichtring sicher vermeiden. Weiterhin kann zwischen der Außenisolation und dem Kabelkanal keine Flüssigkeit und kein Gas austreten, weil dieser Bereich mit der Kunstharz-Vergußmasse abgedichtet ist. Außerdem dichtet diese auch den Bereich zwischen der Leitung und der Außenisolation sicher ab. Folglich kann selbst beim Verwenden einer Kupferlitze als Leitung keine Flüssigkeit und kein Gas durch Kapillarwirkung im Innern der Litze oder zwischen der Leitung und der Außenisolation nach außen gelangen. Auf diese Weise wird außerdem im Gegensatz zu dem Verwenden eines Steckverbinders das Auftreten von Kontaktproblemen sicher vermieden, weil eine durchgehende Leitung ohne Steckkontakte verwendet wird.

Bei einer Weiterbildung der Erfindung entspricht der Durchmesser des Kabelkanals dem Außendurchmesser der Außenisolation oder ist geringfügig kleiner als dieser. Dadurch wird ein sicherer Sitz der Leitung mit Außenisolation in dem Kabelkanal gewährleistet. Außerdem wird dadurch das Abdichten mit der Kunstharz-Vergußmasse erleichtert.

Eine andere Weiterbildung zeichnet sich dadurch aus, daß an dem dem Flansch abgewandten Ende des Kabelkanals eine in diesen ragende, die Außenisolation umschließende Dichtlippe vorgesehen ist. Diese Dichtlippe kann diesen Bereich des Kabelkanals mit der Außenisolation der Leitung abdichten. Dadurch wird beim Einfüllen der Kunstharz-Vergußmasse verhindert, daß diese an dem Ende des Kabelkanals mit der Dichtlippe austreten kann.

Bei einem weiteren Ausführungsbeispiel hat der Flansch an einer Seite eine Ringnut für einen den Durchführungskörper konzentrisch umgebenden Dichtring. Der Dichtring kann in dieser Ringnut sicher gehalten werden. Dadurch erleichtert sich die Montage.

Bei einer anderen Weiterbildung ist der Durchführungskörper an ein Gehäuse geflanscht. An dem Gehäuse können dann weitere Anschlußmöglichkeiten für Leitungen vorgesehen sein. Dadurch läßt sich die Kabeldurchführung mit dem Gehäuse fertig vorkonfektionieren, wodurch sich die Endmontage erleichtert.

An dem Gehäuse kann dann mindestens ein Steckverbinder angeordnet sein. Mit diesem Steckverbinder lassen sich z.B. Leitungen für die Diagnose oder Wartung der elektrischen Schaltung schnell und einfach verbinden, mit der die durch die Kabeldurchführung durchgeführten Leitungen verbunden sind.

Bei einer Weiterbildung der Erfindung ist an einer Seite des Flansches ein Rohrwinkel angeordnet. Durch diesen Rohrwinkel kann die Leitung der Kabeldurchführung zugeführt werden. Dadurch erhöht sich die Beständigkeit der durch die Kabeldurchführung hindurchgeführten Leitung.

Wenn in diesem Fall der Rohrwinkel um eine zu dem Kabelkanal parallele Achse schwenkbar ist, läßt sich die Richtung, in die die Leitung von der Kabeldurchführung weggeführt wird, einfach einstellen. Eine solche Kabeldurchführung ist vielseitiger einsetzbar und leichter zu montieren.

Bei einer Weiterbildung ist ein Anschlag zum Begrenzen der Schwenkbewegung des Rohrwinkels vorgesehen. Auf diese Weise läßt sich ein Beschädigen der durch die Kabeldurchführung durchgeführten Leitung durch ein Verschwenken um einen zu großen Winkel vermeiden.

Bei einer Weiterbildung der Erfindung besteht der Durchführungskörper aus Sandopren und ist in den Flansch einlegbar. Dadurch wird ein Kurzschluß oder ein ungewollter elektrischer Kontakt zwischen der Leitung und einer metallischen Gehäusewand oder zwischen mehreren Leitungen im Bereich des Durchführungskörpers vermieden.

Im folgenden wird ein Ausführungsbeispiel der Erfindung an Hand der Zeichnung näher beschrieben. Es zeigen:
- Fig. 1: eine perspektivische Ansicht einer Kabeldurchführung als erstes Ausführungsbeispiel der Erfindung,
- Fig. 2: eine schematische Draufsicht der Kabeldurchführung,
- Fig. 3: den Schnitt A-A von Fig. 2,
- Fig. 4: eine vergrößerte Abbildung zweier Kanäle im Bereich X aus Fig. 3, wobei in einen Kabelkanal eine Leitung eingeführt ist,
- Fig. 5: eine perspektivische Ansicht einer Kabeldurchführung als zweites Ausführungsbeispiel der Erfindung,
- Fig. 6: eine Draufsicht auf die Kabeldurchführung nach dem zweiten Ausführungsbeispiel,
- Fig. 7: den Schnitt C-C von Fig. 6, und
- Fig. 8: eine vergrößerte Darstellung des Durchführkörpers mit zwei durchgeführten Leitungen von Fig. 7.

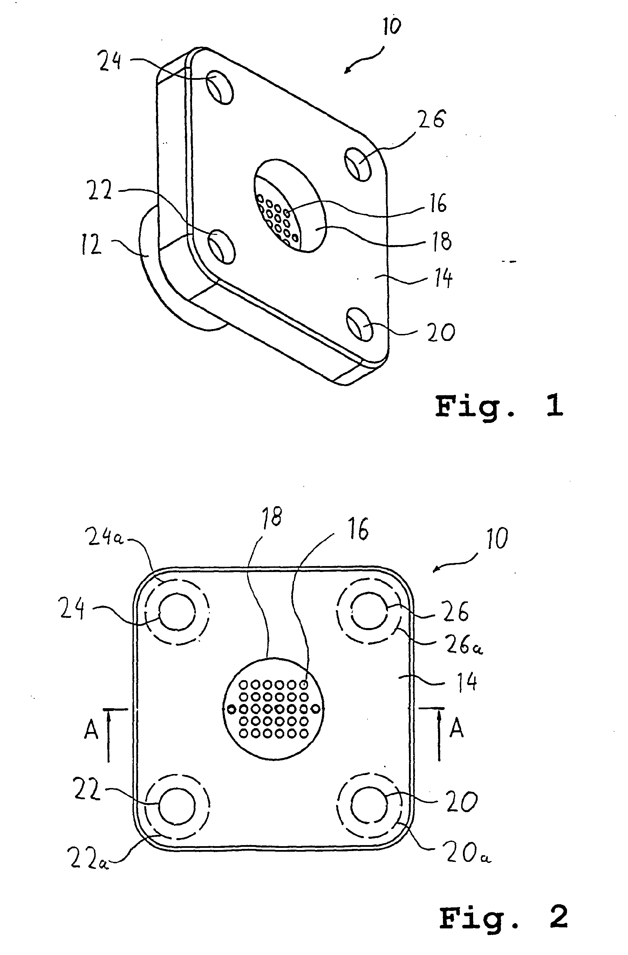

Fig. 1 zeigt eine perspektivische Ansicht einer Kabeldurchführung 10 als ein Ausführungsbeispiel der Erfindung. Die Kabeldurchführung 10 hat einen Durchführungskörper 12 und einen Befestigungsflansch 14. Die Kabeldurchführung 10 ist eine Mehrfachdurchführung und hat in dem Durchführungskörper 12 mehrere durchgehende Kabelkanäle 16. Der Durchführungskörper 12 ist im wesentlichen zylinderförmig. Er ist in eine Bohrung in der Wand eines Getriebegehäuses oder eines Motorgehäuses einsetzbar.

Der Befestigungsflansch 14 hat eine die Kabelkanäle 16 umgebende kreisförmige Öffnung 18 und ist insgesamt quadratisch. Die Ecken des Befestigungsflansches 14 sind abgerundet. Im Bereich seiner vier Ecken hat der Befestigungsflansch 14 durchgehende Öffnungen 20, 22, 24, 26, durch die Schrauben zum Befestigen der Kabeldurchführung 10 am Motorgehäuse oder am Getriebegehäuse hindurchgesteckt werden können.

Fig. 2 zeigt eine schematische Draufsicht auf die Kabeldurchführung 10. Die Öffnungen 20, 22, 24, 26 haben jeweils Einsenkungen 20a, 22a, 24a, 26a, die in der Fig. 2 mit gestrichelten Linien eingezeichnet sind. Die Einsenkungen 20a, 22a, 24a, 26a haben jeweils einen größeren Durchmesser als die Öffnungen 20, 22, 24, 26. Wenn die Kabeldurchführung 10 mit in der Figur nicht eingezeichneten Schrauben an der Wand eines Getriebegehäuses oder eines Motorgehäuses befestigt ist, werden die Köpfe der Befestigungsschrauben in den Einsenkungen 20a, 22a, 24a, 26a jeweils derart aufgenommen, daß sie nicht über die Oberfläche der Kabeldurchführung 10 vorstehen.

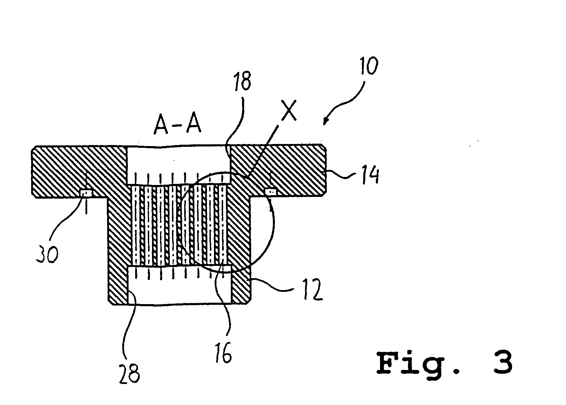

Fig. 3 zeigt den Schnitt A-A von Fig. 2. Der Durchführungskörper 12 hat auf seiner von der Öffnung 18 abgewandten Seite eine Öffnung 28, die die in der Figur unteren Öffnungen der Kanäle 16 einschließt. Der Befestigungsflansch 14 hat an seiner von der Öffnung 18 abgewandten Seite (in Fig. 3 die Unterseite) eine umlaufende Ringnut 30, die den Durchführungskörper 12 umgibt.

Vor dem Befestigen der Kabeldurchführung 10 an der Wand eines Motorgehäuses oder eines Getriebegehäuses wird ein O-Ring in die Ringnut 30 eingelegt. Nach dem Befestigen der Kabeldurchführung 10 mit Befestigungsschrauben, wie vorstehend angegeben, dichtet der in die Ringnut 30 eingelegte O-Ring mit der Wand derart ab, daß kein Öl zwischen der Kabeldurchführung 10 und der Wand hindurchgelangen kann.

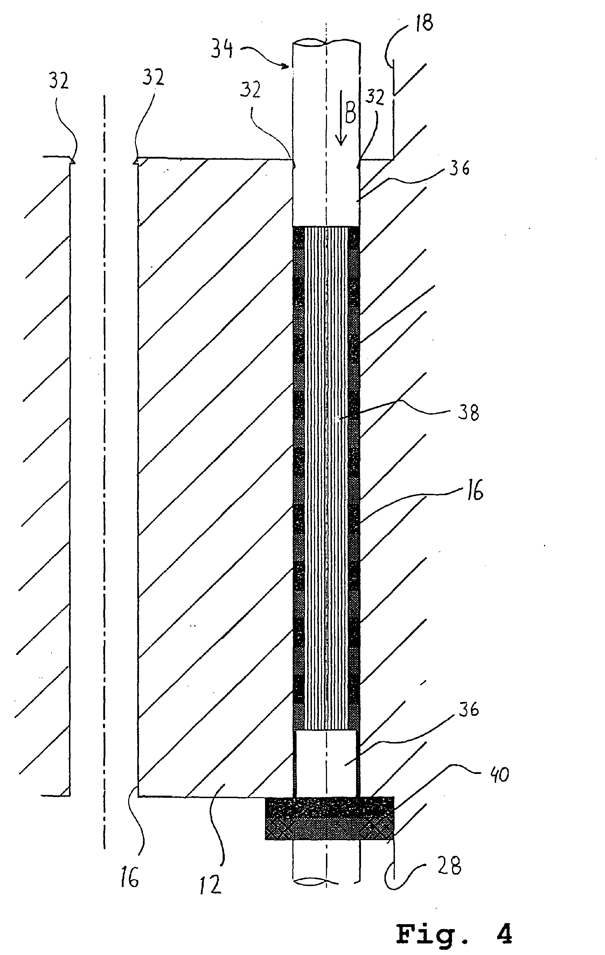

Fig. 4 zeigt eine vergrößerte Darstellung zweier Kabelkanäle 16 im Bereich X von Fig. 3. An Hand dieser Darstellung soll erläutert werden, wie ein Kabel in dem entsprechenden Kabelkanal 16 der Kabeldurchführung 10 angeordnet wird. Der jeweilige Kabelkanal 16 hat eine als umlaufende ringförmige Schneide ausgebildete Dichtlippe 32, die in Fig. 4 am oberen Ende des jeweiligen Kabelkanales 16 angeordnet ist. Ein Kabel 34 hat einen Isoliermantel 36, der eine Kupferlitze 38 umgibt. Vor dem Einführen des Kabels 34 in einen der Kabelkanäle 16 der Kabeldurchführung 10 wird der Isoliermantel 36 auf eine Länge entfernt, die kleiner ist als die Länge des Kabelkanales 16. Anschließend wird das Kabel 34 in die in Fig. 4 mit einem Pfeil bezeichnete Einführrichtung B in den Kabelkanal 16 so weit eingeführt, bis die Dichtlippe 32, wie in Fig. 4 gezeigt, nach dem Hindurchschieben des von dem Isoliermantel 36 befreiten Stückes Kupferlitze 38 wieder mit dem Isoliermantel 36 in Eingriff steht. Anschließend wird von der Öffnung 28 her eine Vergußmasse 40 in den Kabelkanal 16 eingefüllt. Als Vergußmasse 40 eignet sich z.B. Polyurethan (PU). Das Dichtelement 32 verhindert beim Einfüllen der Vergußmasse 40 ein Austreten derselben zur Öffnung 18 hin. Nach dem Aushärten der Vergußmasse 40 dichtet diese die Öffnung 16 um das Kabel 34 derart ab, daß kein Öl hindurchgelangen kann. Weil im Bereich des Kabelkanales 16 auch die Kupferlitze 38 selber mit der Vergußmasse 40 vergossen ist, kann auch durch die Kapillarwirkung der Kupferlitze 38 kein Öl durch die Kabeldurchführung 10 hindurchgelangen.

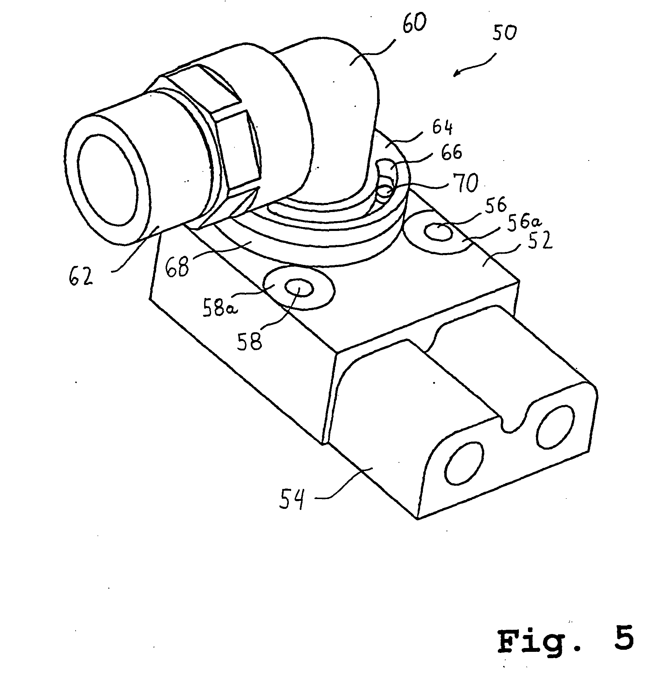

Fig. 5 zeigt eine perspektivische Ansicht einer Kabeldurchführung 50 als zweites Ausführungsbeispiel der Erfindung. Die Kabeldurchführung 50 hat ein Verteilergehäuse 52, an dem ein Steckverbinder 54 angeordnet ist. Das Verteilergehäuse 52 hat außerdem zwei Öffnungen 56, 58, durch die jeweils eine nicht dargestellte Schraube hindurchgesteckt werden kann, um das Verteilergehäuse 52 an einem nicht dargestellten Motorgehäuse bzw. Getriebegehäuse zu befestigen. Ähnlich den Öffnungen 20 bis 26 bei dem vorhergehend beschriebenen Ausführungsbeispiel haben die Öffnungen 56, 58 jeweils eine Einsenkung 56a, 58a zum Aufnehmen des Schraubenkopfes.

Die Kabeldurchführung 50 hat außerdem einen Rohrwinkel 60, an den eine Zugentlastung 62 angeschraubt ist. Der Rohrwinkel 60 verhindert ein Beschädigen oder Abscheren der durchgeführten Leitungen. Er ist ein um etwa 90° abgewinkeltes Rohr, das an seinem dem Verteilergehäuse 52 zugewandten Ende einen Flansch 64 hat. In dem Flansch 64 sind zwei teilkreisförmige Nuten ausgebildet, von denen in Fig. 5 nur eine Nut 66 zu sehen ist. Der Flansch 64 ist schwenkbar um seine Mittelachse an einem Flansch 68 an dem Verteilergehäuse 52 befestigt. Dabei steht eine Nocke 70 an dem Flansch 68 mit der Nut 66 in dem Flansch 64 in Eingriff und begrenzt die Schwenkbewegung des Rohrwinkels 60.

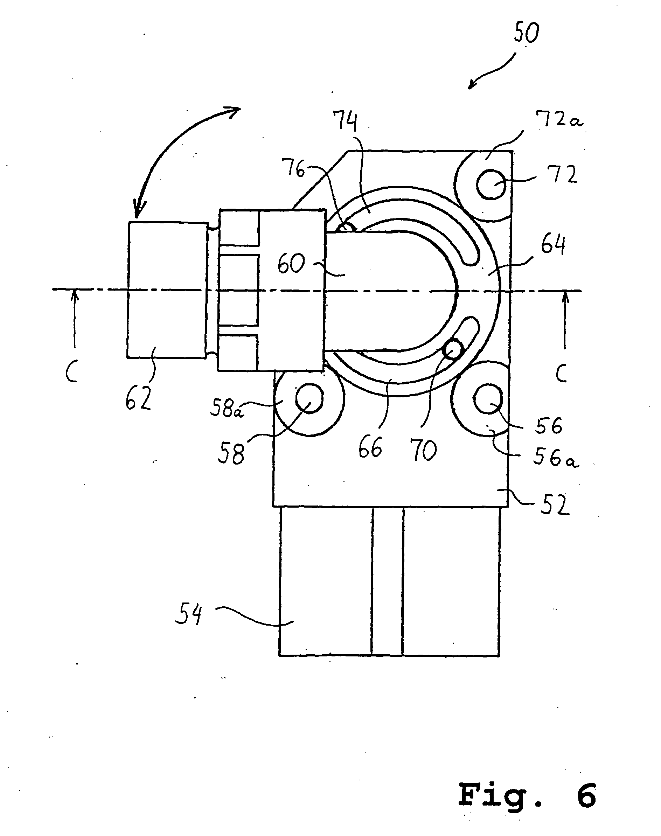

Fig. 6 zeigt eine Draufsicht auf die Kabeldurchführung 50 nach dem zweiten Ausführungsbeispiel. Das Verteilergehäuse 52 hat eine dritte Öffnung 72 mit einer Einsenkung 72a. Außerdem ist in Fig. 6 eine weitere teilkreisförmige Nut 74 ähnlich der Nut 66 und eine zweite Nocke 76 ähnlich der Nocke 70 eingezeichnet.

Der Rohrwinkel 60 ist bei der gezeigten Kabeldurchführung 50 um einen Winkel von etwa 120° um die Mittelachse des Flansches 64 schwenkbar, wie das in Fig. 6 durch einen Doppelpfeil angedeutet ist.

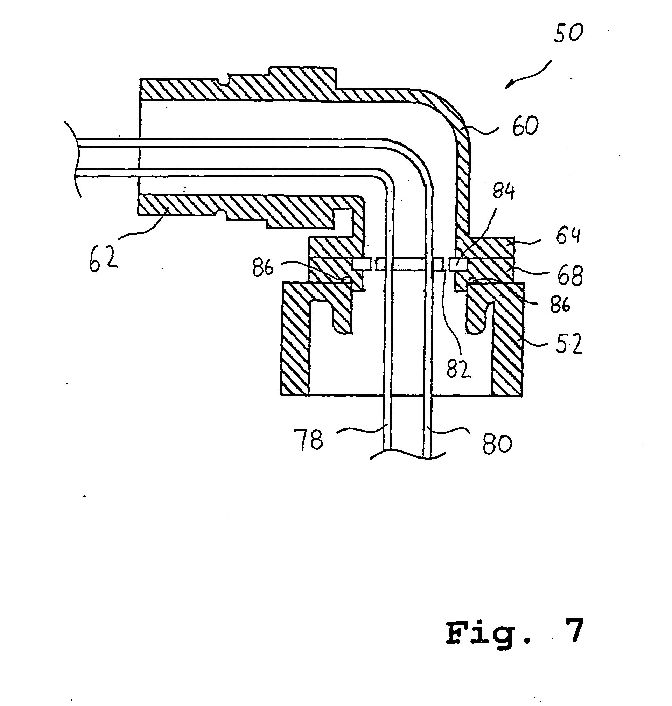

Fig. 7 zeigt den Schnitt C-C von Fig. 6. In Fig. 7 sind zwei Kabel 78, 80 eingezeichnet. Die einzelnen Elemente der Zugentlastung 62 sind in Fig. 7 nicht dargestellt. Die Zugentlastung 62 fixiert die Kabel 78, 80 auf bekannte Weise.

Die Kabel 78, 80 sind durch Kabelkanäle 82 in einem Durchführungskörper 84 hindurchgeführt. Der Durchführungskörper 84 ist zwischen den beiden Flanschen 64 und 68 befestigt. Der Flansch 68 hat an seiner von dem Durchführungskörper 84 abgewandten Seite eine Ringnut 86, in die ein O-Ring zum Abdichten einlegbar ist.

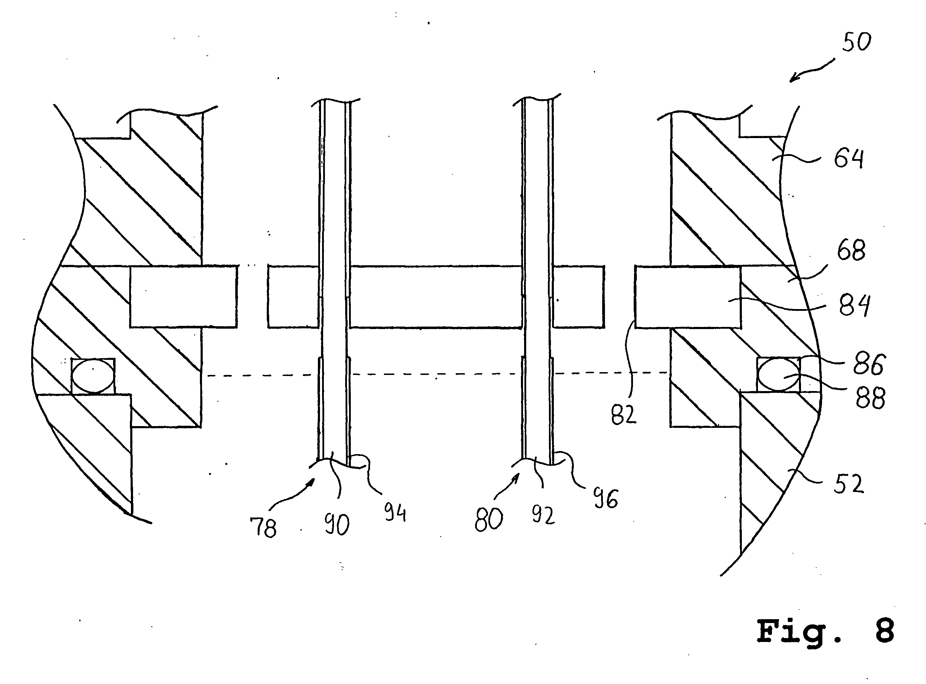

Fig. 8 zeigt eine vergrößerte Teilansicht der Kabeldurchführung 50 von Fig. 7. In Fig. 8 ist ein in die Ringnut 86 eingelegter O-Ring 88 eingezeichnet, der den Flansch 68 auf dem Verteilergehäuse 52 abdichtet. Die beiden Kabel 78, 80 haben jeweils eine Leitung 90, 92 aus Litzendraht und einen Isoliermantel 94, 96. Anders als bei dem vorhergehend beschriebenen Ausführungsbeispiel ist der jeweilige Isoliermantel 94, 96 in einem Bereich des Kabels 78, 80 entfernt, der sich aus dem Kabelkanal 82 heraus nach unten in Fig. 8 erstreckt.

Wenn alle Kabelkanäle 82 in dem Durchführungskörper 84 mit Kabeln bestückt sind, wird die Kabeldurchführung in Fig. 8 von unten her gesehen mit einer Kunstharz-Vergußmasse bis zu der in Fig. 8 gestrichelt dargestellten Linie vergossen. Dabei kann diese Kunstharz-Vergußmasse einfacher als bei dem vorhergehend beschriebenen Ausführungsbeispiel in den Zwischenraum zwischen der jeweiligen Leitung 90, 92 und dem zugehörigen Kabelkanal 82 eindringen.

## Patentansprüche

1. Kabeldurchführung mit einem in Längsrichtung mindestens einen Kabelkanal (16, 82) enthaltenden geflanschten Durchführungskörper (12, 84) und einer durch den Kabelkanal (16, 82) geführten elektrischen Leitung (38, 90, 92) mit Außenisolation (36, 94, 96)
**dadurch gekennzeichnet, daß**
die Außenisolation (36, 94, 96) der elektrischen Leitung (38, 90, 92) auf einem Teil der Länge des Kabelkanals (16, 82) durch eine Kunstharz-Vergußmasse (40) ersetzt ist, und daß der Flansch (14, 68) an einer Seite als Träger eines Dichtringes ausgebildet ist.

2. Kabeldurchführung nach Anspruch 1, **dadurch gekennzeichnet, daß** der Durchmesser des Kabelkanals (16, 82) dem Außendurchmesser der Außenisolation (36, 94, 96) entspricht oder geringfügig kleiner ist.

3. Kabeldurchführung nach Anspruch 1 oder 2, **dadurch gekennzeichnet, daß** an dem dem Flansch (14) abgewandten Ende des Kabelkanals (16) eine in diesen ragende, die Außenisolation (36) umschließende Dichtlippe (32) vorgesehen ist.

4. Kabeldurchführung nach einem der vorhergehenden Ansprüche, **dadurch gekennzeichnet, daß** der Flansch (14, 68) an einer Seite eine Ringnut (30, 86) für einen den Durchführungskörper (12, 84) konzentrisch umgebenden Dichtring (88) hat.

5. Kabeldurchführung nach einem der vorhergehenden Ansprüche, **dadurch gekennzeichnet, daß** der Durchführungskörper (12, 84) an ein Gehäuse (52) geflanscht ist.

6. Kabeldurchführung nach Anspruch 5, **dadurch gekennzeichnet, daß** mindestens ein Steckverbinder (54) an dem Gehäuse (52) angeordnet ist.

7. Kabeldurchführung nach einem der vorhergehenden Ansprüche, **dadurch gekennzeichnet, daß** an einer Seite des Flansches (14, 68) ein Rohrwinkel (60) angeordnet ist.

8. Kabeldurchführung nach Anspruch 7, **dadurch gekennzeichnet, daß** der Rohrwinkel (60) um eine zu dem Kabelkanal (16, 82) parallele Achse schwenkbar ist.

9. Kabeldurchführung nach Anspruch 8, **dadurch gekennzeichnet, daß** ein Anschlag (66, 70; 74, 76) zum Begrenzen der Schwenkbewegung des Rohrwinkel (60) vorgesehen ist.

10. Kabeldurchführung nach einem der vorhergehenden Ansprüche, **dadurch gekennzeichnet, daß** der Durchführungskörper (84) aus Sandopren besteht und in den Flansch (68) einlegbar ist.
